(19) Europäisches Patentamt
European Patent Office
Office européen des brevets

(11) **EP 4 424 655 A1**

(12) **EUROPEAN PATENT APPLICATION**
published in accordance with Art. 153(4) EPC

(43) Date of publication:
**04.09.2024 Bulletin 2024/36**

(21) Application number: **22886950.9**

(22) Date of filing: **24.10.2022**

(51) International Patent Classification (IPC):
**C04B 35/5835** (2006.01)

(52) Cooperative Patent Classification (CPC):
**C04B 35/583; C04B 35/5831**

(86) International application number:
**PCT/JP2022/039524**

(87) International publication number:
**WO 2023/074623 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2021 PCT/JP2021/039320**

(71) Applicant: **Sumitomo Electric Industries, Ltd.**
**Chuo-ku**
**Osaka-shi**
**Osaka 541-0041 (JP)**

(72) Inventors:
• **SANO, Kenta**
  **Osaka-shi**
  **Osaka 541-0041 (JP)**
• **ISHII, Akito**
  **Osaka-shi**
  **Osaka 541-0041 (JP)**
• **MICHIUCHI, Masato**
  **Osaka-shi**
  **Osaka 541-0041 (JP)**
• **OKAMURA, Katsumi**
  **Osaka-shi**
  **Osaka 541-0041 (JP)**
• **HIRAI, Kei**
  **Osaka-shi**
  **Osaka 541-0041 (JP)**

(74) Representative: **Boult Wade Tennant LLP**
**Salisbury Square House**
**8 Salisbury Square**
**London EC4Y 8AP (GB)**

(54) **CUBIC BORON NITRIDE SINTERED BODY**

(57) The cubic boron nitride sintered body of the present disclosure contains 35-100 vol% inclusive of cubic boron nitride particles and 0-65 vol% inclusive of a binder material, wherein: the lattice constant of the cubic boron nitride particles is 3.6140-3.6161Å inclusive; the silicon content of the cubic boron nitride particles is 0.02 mass% or less; and the binder material contains at least one member selected from the group consisting of a compound, which comprises at least one element selected from the group consisting of the group 4 elements, the group 5 elements and the group 6 elements of the periodic table, aluminum, silicon, iron, cobalt and nickel, and at least one element selected from the group consisting of carbon, nitrogen, boron and oxygen, and a solid solution of the aforesaid compound.

FIG.4

**Description**

TECHNICAL FIELD

The present disclosure relates to a cubic boron nitride sintered material. This application claims priority based on the international application PCT/JP2021/039320 filed on October 25, 2021, and the entire contents of the Japanese patent application are incorporated herein by reference.

BACKGROUND ART

Cubic boron nitride (hereinafter, also referred to as cBN) has hardness and thermal conductivity second only to diamond, and further has a feature of having a low reactivity with an iron-based metal as compared with diamond. Therefore, a cubic boron nitride sintered material (hereinafter, also referred to as cBN sintered material) containing cubic boron nitride grains (hereinafter, also referred to as cBN grains) is widely used particularly for cutting of iron-based difficult-to-machine materials (for example, PTL 1 and PTL 2).

CITATION LIST

PATENT LITERATURE

PTL 1: WO 2005/066381
PTL 2: Published Japanese Translations of PCT international publication for patent application JP 2005-514300

SUMMARY OF INVENTION

A cubic boron nitride sintered material of the present disclosure is a cubic boron nitride sintered material including 35 volume% to 100 volume% of a cubic boron nitride grain and 0 volume% to 65 volume% of a binder. A lattice constant of the cubic boron nitride grain is 3.6140 Å to 3.6161 Å, a silicon content ratio in the cubic boron nitride grain is 0.02 mass% or less, and the binder includes at least one selected from a group consisting of a compound and a solid solution of the compound, the compound consisting of at least one element selected from a group consisting of a group 4 element, a group 5 element, a group 6 element in the periodic table, aluminum, silicon, iron, cobalt, and nickel and at least one element selected from a group consisting of carbon, nitrogen, boron, and oxygen.

BRIEF DESCRIPTION OF THE DRAWINGS

FIG. 1 shows an image showing an example of a reflected electron image obtained by observing a cubic boron nitride polycrystal with an SEM.
FIG. 2 shows an image obtained by reading the reflected electron image of FIG. 1 into image processing software.
FIG. 3 shows a reflected electron image as an upper image and shows a concentration cross-section graph obtained from the reflected electron image as a lower image.
FIG. 4 is a diagram for explaining a method of defining a black region and a binder.
FIG. 5 is a diagram for explaining the boundary between a black region and a binder.
FIG. 6 is an image obtained by binarizing the reflected electron image of FIG. 1.

DETAILED DESCRIPTION

[Problem to be Solved by the Present Disclosure]

In recent years, from the viewpoint of cost reduction, a demand for high-efficiency machining has been increasing. Therefore, a cubic boron nitride sintered material is desired which, when used as a tool material, can provide a tool having a long life even in high-efficiency machining.

[Advantageous Effect of the Present Disclosure]

The cubic boron nitride sintered material of the present disclosure can extend the life of a tool, particularly in high-efficiency machining, when used as a tool material.

[Description of Embodiments]

First, embodiments of the present disclosure will be listed and described.

(1) A cubic boron nitride sintered material of the present disclosure is a cubic boron nitride sintered material including 35 volume% to 100 volume% of a cubic boron nitride grain and 0 volume% to 65 volume% of a binder. A lattice constant of the cubic boron nitride grain is 3.6140 Å to 3.6161 Å, a silicon content ratio in the cubic boron nitride grain is 0.02 mass% or less, and the binder includes at least one selected from a group consisting of a compound and a solid solution of the compound, the compound consisting of at least one element selected from a group consisting of a group 4 element, a group 5 element, a group 6 element in the periodic table, aluminum, silicon, iron, cobalt, and nickel and at least one element selected from a group consisting of carbon, nitrogen, boron, and oxygen. The cubic boron nitride sintered material of the present disclosure can extend the life of a tool, particularly in high-efficiency machining, when used as a tool material.
(2) In the above (1), the lattice constant of the cubic boron nitride grain is preferably 3.6142 Å to 3.6158 Å. This further improves the tool life.
(3) In the above (1) or (2), the lattice constant of the cubic boron nitride grain is preferably 3.6145 Å to 3.6155 Å. This further improves the tool life.
(4) In any one of the above (1) to (3), the silicon content ratio in the cubic boron nitride grain is preferably 0.01 mass% or less. This further improves the tool life.
(5) In any one of the above (1) to (4), the silicon content ratio in the cubic boron nitride grain is preferably 0.001 mass% or less. This further improves the tool life.
(6) In any one of the above (1) to (5), a content ratio of the cubic boron nitride grain in the cubic boron nitride sintered material is preferably 40 volume% to 95 volume%. This further improves the tool life.

[Detailed Description of Embodiments]

The cubic boron nitride sintered material of the present disclosure is described below. In the present specification, the notation in the form of "A to B" means a lower limit and an upper limit of a range (that is, A or more and B or less), and when there is no description of a unit for A and a unit is described only for B, the unit of A and the unit of B are the same.
In the present specification, when a compound or the like is represented by a chemical formula, any conventionally known atomic ratio is included unless the atomic ratio is particularly limited, and the compound or the like is not necessarily limited to a compound or the like in a stoichiometric range. For example, when "TiN" is described, the ratio of the number of atoms constituting TiN includes all conventionally known atomic ratios.

[First Embodiment: Cubic Boron Nitride Sintered Material]

«Cubic Boron Nitride Sintered Material»

A cubic boron nitride sintered material according to an embodiment of the present disclosure (hereinafter, referred to as "the embodiment") is a cubic boron nitride sintered material including 35 volume% to 100 volume% of a cubic boron nitride grain and 0 volume% to 65 volume% of a binder. A lattice constant of the cubic boron nitride grain is 3.6140 Å to 3.6161 Å, a silicon content ratio in the cubic boron nitride grain is 0.02 mass% or less, and the binder includes at least one selected from a group consisting of a compound and a solid solution of the compound, the compound consisting of at least one element selected from a group consisting of a group 4 element, a group 5 element, a group 6 element in the periodic table, aluminum, silicon, iron, cobalt, and nickel and at least one element selected from a group consisting of carbon, nitrogen, boron, and oxygen.
The cubic boron nitride sintered material of the embodiment can extend the life of a tool, particularly in high-efficiency machining, when used as a tool material. The reasons for this are presumed to be as described in (i) to (iii) below.

(i) The cubic boron nitride sintered material of the embodiment includes 35 volume% to 100 volume% of the cBN grain having high hardness, strength, and toughness. Therefore, the cubic boron nitride sintered material has excellent wear resistance and fracture resistance, and the life of a tool is extended by using the cubic boron nitride sintered material.

(ii) In the cubic boron nitride sintered material of the embodiment, the lattice constant of the cubic boron nitride grain is 3.6140 Å to 3.6161 Å. The lattice constant of a unit lattice of a general cubic boron nitride (hereinafter, the lattice constant of a unit lattice is simply referred to as lattice constant) is 3.6162 Å. The lattice constant of the cBN grain used in the embodiment is smaller than the lattice constant of a general cBN grain. In the cBN sintered material using the cBN grain having a small lattice constant, the thermal conductivity of the cBN grain is high, and the occurrence of crater wear due to cutting heat generated during cutting and the occurrence of fracture due to the development of a crater are suppressed, and the life of a tool using the cubic boron nitride sintered material is improved. The reason why the thermal conductivity of the cBN grain is increased is not clear, but it is presumed that the covalent bond is further strengthened by decreasing the lattice constant, and thus lattice vibration is easily transmitted.

(iii) In the cubic boron nitride sintered material of the embodiment, the silicon content ratio in the cubic boron nitride grain is 0.02 mass% or less. A conventional cBN grain include about 0.1 mass% of silicon as an impurity. Silicon has a lower thermal conductivity than cubic boron nitride. The cBN grain used in the embodiment has a high thermal conductivity because the content ratio of silicon having a low thermal conductivity is reduced. Therefore, in the cBN sintered material having the cBN grain, the occurrence of crater wear due to cutting heat generated during cutting and the occurrence of fracture due to the development of the crater are suppressed, and the life of a tool using the cubic boron nitride sintered material is improved.

<Composition of Cubic Boron Nitride Sintered Material>

The cubic boron nitride sintered material of the embodiment includes 35 volume% to 100 volume% of a cubic boron nitride grain and 0 volume% to 65 volume% of a binder. The cBN sintered material can include an inevitable impurity resulting from a raw material, a production condition, or the like, as long as the effects of the present disclosure are exhibited.

The lower limit of the content ratio of the cBN grain in the cBN sintered material is 35 volume% or more, preferably 40 volume% or more, and more preferably 45 volume% or more, from the viewpoint of improving the hardness. The upper limit of the content ratio of the cBN grain in the cBN sintered material is 100 volume% or less. The cBN sintered material of the embodiment can consist of the cBN grain only. The upper limit of the content ratio of the cBN grain in the cBN sintered material is preferably 99 volume% or less, preferably less than 98 volume%, preferably 95 volume% or less, preferably 90 volume% or less, preferably 85 volume% or less, and more preferably 80 volume% or less, although the optimum value varies depending on the use. The content ratio of the cBN grain in the cBN sintered material is 35 volume% to 100 volume%, preferably 35 volume% to 99 volume%, preferably 35 volume% or more and less than 98 volume%, preferably 40 volume% to 95 volume%, preferably 40 volume% to 90 volume%, preferably 40 volume% to 85 volume%, more preferably 45 volume% to 80 volume%.

The lower limit of the content ratio of the binder in the cBN sintered material is 0 volume% or more. The cBN sintered material of the embodiment may not include a binder. The lower limit of the content ratio of the binder in the cBN sintered material is preferably 1 volume% or more, preferably more than 2 volume%, preferably 5 volume% or more, preferably 10 volume% or more, preferably 15 volume% or more, and more preferably 20 volume% or more, from the viewpoint of ensuring the function as the binder. The upper limit of the content ratio of the binder in the cBN sintered material is 65 volume% or less, preferably 60 volume% or less, and more preferably 55 volume% or less, from the viewpoint of improving the hardness. The content ratio of the binder in the cBN sintered material is 0 volume% to 65 volume%, preferably 1 volume% to 65 volume%, preferably more than 2 volume% and 65 volume% or less, preferably 5 volume% to 60 volume%, preferably 10 volume% to 60 volume%, preferably 15 volume% to 60 volume%, more preferably 20 volume% to 55 volume%.

The cBN sintered material of the embodiment preferably includes 35 volume% or more and less than 100 volume% of a cubic boron nitride grain and more than 0 volume% and 65 volume% or less of a binder, preferably includes 35 volume% or more and less than 98 volume% of a cubic boron nitride grain and more than 2 volume% and 65 volume% or less of a binder, preferably includes 40 volume% or more and 95 volume% or less of a cubic boron nitride grain and 5 volume% to 60 volume% of a binder, and more preferably includes 45 volume% to 80 volume% of a cubic boron nitride grain and 20 volume% to 55 volume% of a binder.

The cBN sintered material of the embodiment preferably consists of 35 volume% to 100 volume% of a cubic boron nitride grain and 0 volume% to 65 volume% of a binder, preferably consists of 35 volume% or more and less than 100 volume% of a cubic boron nitride grain and more than 0 volume% and 65 volume% or less of a binder, preferably consists of 35 volume% or more and less than 98 volume% of a cubic boron nitride grain and more than 2 volume% and 65 volume% or less of a binder, more preferably consists of 40 volume% to 85 volume% of a cubic boron nitride grain and 15 volume% to 60 volume% of a binder, and further preferably consists of 45 volume% to 80 volume% of a cubic boron nitride grain and 20 volume% to 55 volume% of a binder. In these cases, the cBN sintered material can include an inevitable impurity resulting from a raw material, a production condition, or the like, as long as the effects of the present disclosure are exhibited.

The content ratio of the cBN grain (volume%) and the content ratio of the binder (volume%) in the cBN sintered material can be confirmed by performing structure observation, elemental analysis, and the like on the cBN sintered material using an energy dispersive X-ray analyzer (EDX) (Octane Elect EDS system) (hereinafter, also referred to as "SEM-EDX") attached to a scanning electron microscope (SEM) ("JSM-7800F" (trade name) manufactured by JEOL Ltd.). The specific measurement method is as follows.

First, the cBN sintered material is cut at an arbitrary location to produce a sample including a cross section of the cBN sintered material. For the formation of the cross section, a focused ion beam device, a cross section polisher device, or the like can be used. Next, the cross section is observed with the SEM at a magnification of 5000x to obtain a reflected electron image. In the reflected electron image, a region where the cBN grains are present is a black region, and a region where the binder is present is at least one of a gray region and a white region. When the cBN sintered material consists of only the cBN grains, the whole reflected electron image is black or dark gray.

Next, binarization processing is performed on the reflected electron image by using image analysis software ("WinROOF" of MITANI CORPORATION). In the image after the binarization processing, a region where the cBN grains are present (a black region in the reflected electron image) becomes a dark field, and a region where the binder is present (at least one of a gray region and a white region in the reflected electron image) becomes a bright field. A measurement region (15 $\mu$m $\times$ 20 $\mu$m) is set in the image after the binarization processing. The area ratio of pixels derived from the dark field (pixels derived from the cBN grains, pixels derived from the black region in the reflected electron image) to the total area of the measurement visual field is calculated. The calculated area ratio is regarded as volume%, and thus the content ratio (volume%) of the cBN grains can be found.

The content ratio (volume%) of the binder can be found by calculating the area ratio of pixels derived from the bright field (pixels derived from the binder, the sum of pixels derived from the gray region and the white region in the reflected electron image) to the total area of the measurement visual field from the image after the binarization processing.

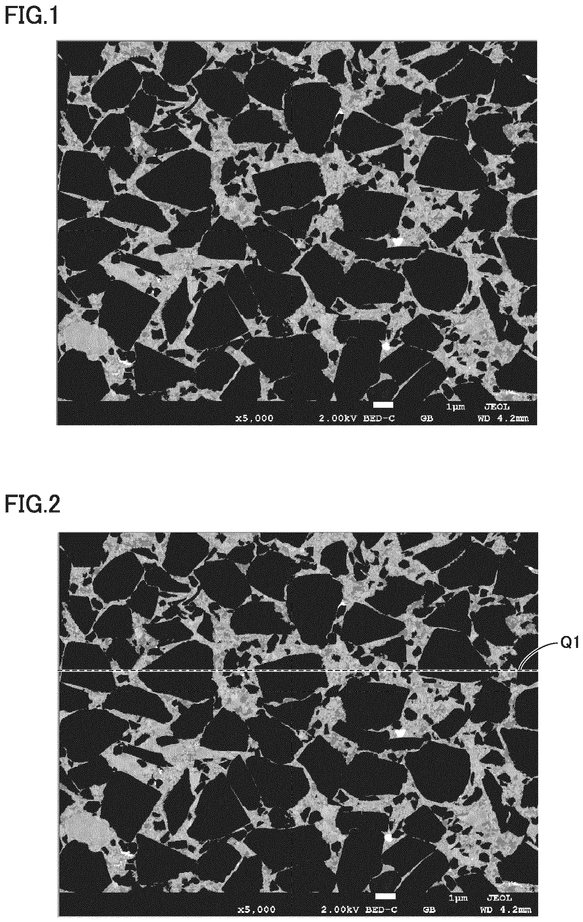

A specific method of the binarization processing will be described with reference to FIGS. 1 to 6. Note that FIGS. 1 to 6 are diagrams shown for the purpose of explaining the method of the binarization processing, and do not necessarily show the cubic boron nitride sintered material of the embodiment.

FIG. 1 shows an example of a reflected electron image obtained by observing a cBN sintered material with an SEM. The reflected electron image is read into image processing software. The read image is shown in FIG. 2. As shown in FIG. 2, an arbitrary line Q1 is drawn in the read image.

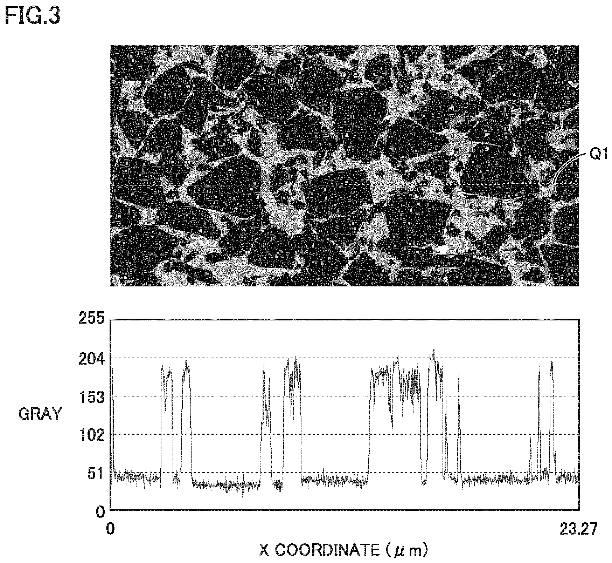

The concentration cross-sectional view is measured along the line Q1 and the GRAY value is read. A graph (hereinafter, also referred to as a "concentration cross-section graph") in which the line Q1 is set as an X coordinate and the GRAY value is set as a Y coordinate is produced. In FIG. 3 showing a reflected electron image of a cBN sintered material and a concentration cross-section graph of the reflected electron image, the upper image is the reflected electron image and the lower graph is the concentration cross-section graph. In FIG. 3, the width of the reflected electron image and the width (23.27 $\mu$m) of the X coordinate of the concentration cross-section graph coincide with each other. Therefore, the distances from the left end of the line Q1 in the reflected electron image to specific positions on the line Q1 are indicated by the values of the X coordinates of the concentration cross-section graph.

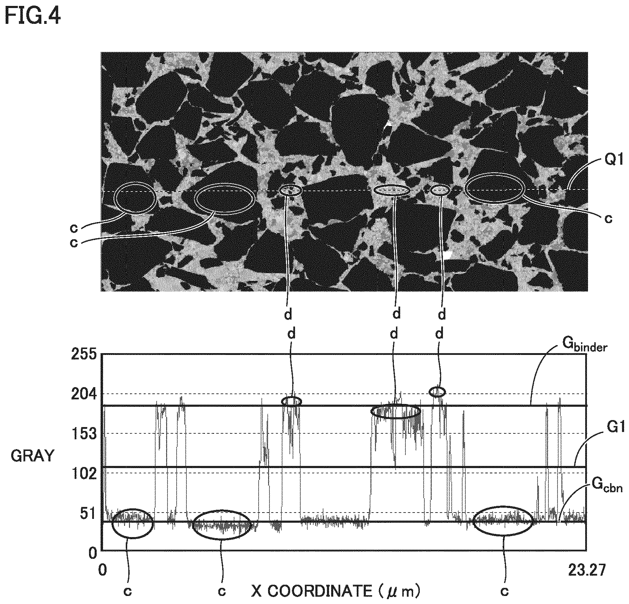

In the reflected electron image of FIG. 3, three black regions where cBN grains are present are arbitrarily selected. The black region is, for example, a portion indicated by an ellipse of a symbol c in the reflected electron image of FIG. 4.

Each GRAY value in the three black regions is read from the concentration cross-section graph. Each GRAY value in the three black regions is each average value of the GRAY value in the three regions surrounded by the ellipse c in the concentration cross-section graph of FIG. 4. The average values of the GRAY values in each of the three regions are calculated. The average values are used as the GRAY values of cBN (hereinafter also referred to as $G_{cbn}$).

Three regions where the binder is present, which are shown in gray in the reflected electron image of FIG. 3, are arbitrarily selected. The binder is, for example, a portion indicated by an ellipse of a symbol d in the reflected electron image of FIG. 4.

Each GRAY value of the three binders is read from the concentration cross-section graph. Each GRAY value of the three binders is each average value of the GRAY value of the three regions surrounded by the ellipse of the symbol d in the concentration cross-section graph of FIG. 4. Each of the average values of the GRAY values in the three regions are calculated. The average value is used as the GRAY value of the binder (hereinafter also referred to as $G_{binder}$).

The GRAY value represented by $(G_{cbn} + G_{binder})/2$ is defined as the GRAY value of the interface between the black region (cBN grains) and the binder. For example, in the concentration cross-section graph of FIG. 4, the GRAY value $G_{cbn}$ of the black region (cBN grains) is shown by line $G_{cbn}$, the GRAY value $G_{binder}$ of the binder is shown by line $G_{binder}$, and the GRAY value represented by $(G_{cbn} + G_{binder})/2$ is shown by line G1.

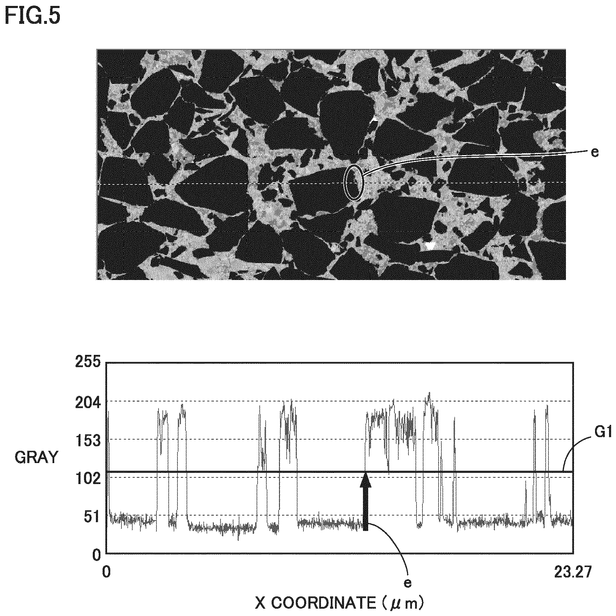

As described above, in the concentration cross-section graph, by defining the interface between the black region (cBN grains) and the binder, the values of the X coordinate and the Y coordinate at the interface between the black region (cBN grains) and the binder can be read. The interface can be defined arbitrarily. For example, in the reflected electron image in the upper image of FIG. 5, a region surrounded by an ellipse of a symbol e is an example of a region including the interface between the black region (cBN grains) and the binder. In the concentration cross-section graph in the lower image of FIG. 5, the interface between the black region (cBN grains) and the binder in the region surrounded by the ellipse of the symbol e is indicated by an arrow e. The tip of the arrow e indicates the position of the intersection between the concentration cross-section graph of the GRAY value and the line G1 indicating the GRAY value ($G_{cbn}$ + $G_{binder}$)/2. The values of the X coordinate at the tip of the arrow e and the Y coordinate at the tip of the arrow e correspond to the values of the X coordinate and the Y coordinate at the interface between the black region (cBN grains) and the binder.

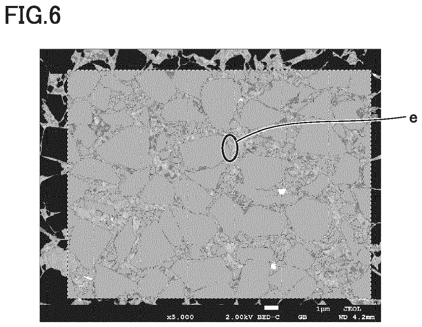

Binarization processing is performed using the values of the X coordinate and the Y coordinate at the interface between the black region (cBN grains) and the binder as thresholds. The image after the binarization processing is shown in FIG. 6. In FIG. 6, the region surrounded by the dotted line is the region where the binarization processing has been performed. The image after the binarization processing may include a white region (a portion whiter than the bright field, a pixel derived from the binder) corresponding to a region which is white in the reflected electron image before the binarization processing.

In FIG. 6, the area ratio of pixels derived from the dark field (pixels derived from the cBN grains, pixels derived from the black region in the reflected electron image) to the area of the measurement visual field is calculated. The calculated area ratio is regarded as volume%, and thus the content ratio (volume%) of the cBN grains can be found.

In FIG. 6, the content ratio (volume%) of the binder can be found by calculating the area ratio of pixels derived from the bright field (pixels derived from the binder, the sum of pixels derived from the gray region and the white region in the reflected electron image) to the area of the measurement visual field.

In the image after the binarization processing, the fact that the dark field region indicates the cBN grains and the bright field region indicates the binders is confirmed by specifying elements included in each of the dark field and the bright field by performing analysis using energy dispersive X-ray spectroscopy (SEM-EDX) on the same region as the region captured in the image after the binarization processing.

According to the above measurement method, the content ratio (volume%) of the cubic boron nitride grains in the cubic boron nitride sintered material is measured in five different measurement regions. The average of the measured values of the five measurement regions is defined as the content ratio (volume%) of the cubic boron nitride grains in the cubic boron nitride sintered material of the embodiment.

According to the above measurement method, the content ratio (volume%) of the binder in the cubic boron nitride sintered material is measured in five different measurement regions. The average of the measured values of the five measurement regions is defined as the content ratio (volume%) of the binder in the cubic boron nitride sintered material of the embodiment.

As far as the applicant measured, as long as the content ratio (volume%) of cBN grains and the content ratio (volume%) of binder in the cBN sintered material were measured in the same sample, there was almost no variation in the measurement results even when the selected portion of the measurement visual field was changed and calculated multiple times. It was confirmed that even if the measurement field of view is arbitrarily set, the measurement results are not intentional.

inevitable Impurity>

The cubic boron nitride sintered material of the embodiment may include an inevitable impurity as long as the effects of the present disclosure are exhibited. Examples of the inevitable impurity include metallic elements such as alkali metal elements (lithium (Li), sodium (Na), potassium (K), and the like) and alkaline-earth metal elements (calcium (Ca), magnesium (Mg), and the like). When the cubic boron nitride sintered material includes an inevitable impurity, the content ratio of the inevitable impurity is preferably 0.1 mass% or less. The content ratio of inevitable impurity can be measured by secondary ion mass spectrometry (SIMS).

<<Cubic Boron Nitride Grain>>

<Lattice Constant>

In the cubic boron nitride sintered material of the embodiment, a lattice constant of cubic boron nitride grain is 3.6140 Å to 3.6161 Å. According to this, the thermal conductivity of the cBN grain is increased. Therefore, in the cBN sintered material including the cBN grains, the occurrence of crater wear due to cutting heat generated during cutting and the occurrence of fracture due to the development of a crater are suppressed, and the tool life is improved.

The upper limit of the lattice constant of the cBN grain is 3.6161 Å or less, preferably 3.6158 Å or less, and more preferably 3.6155 Å or less, from the viewpoint of improving thermal conductivity. The lower limit of the lattice constant of the cBN grain is 3.6140 Å or more, preferably 3.6142 Å or more, and more preferably 3.6145 Å or more, from the viewpoint of suppressing defects. The lattice constant of the cBN grain is 3.6140 Å to 3.6161 Å, preferably 3.6142 Å to 3.6158 Å, and more preferably 3.6145 Å to 3.6155 Å.

The lattice constant of the cBN grain is measured and calculated by the following procedure.

<Measurement Method>

The cubic boron nitride sintered material is immersed in hydrofluoric-nitric acid (hydrofluoric acid (concentration: 60 mass%) : nitric acid (concentration: 70 mass%) = 5:5 (volume ratio)) for 48 hours in a closed vessel. As a result, all the binder is dissolved in the hydrofluoric-nitric acid, and only the cubic boron nitride grains remain.

The cubic boron nitride grains are recovered. The cubic boron nitride grains are filled in a capillary for X-ray crystallography (product name: Mark Tube) having a size of 0.3 mm manufactured by TOHO CO., LTD., and the capillary is used as a sealed test specimen.

As a standard sample for calculating the wavelength $\lambda$ of the synchrotron radiation, a powder made of cerium oxide (manufactured by KOJUNDO CHEMICAL LABORATORY CO., LTD.) is prepared. The standard sample powder is filled in a capillary for X-ray crystallography having a diameter of 0.3 mm manufactured by TOHO, to prepare a sealed standard sample.

X-ray diffraction measurement is performed on the sealed test specimen filled with the cubic boron nitride grains under the following conditions to obtain a line profile of six or more diffracted peaks including at least four or more diffracted peaks of the each orientation plane of (111), (200), (220), (311), (400), and (331), which are the main orientations of cubic boron nitride, and two diffracted peaks of the each orientation plane of (422) and (531).

(X-ray diffraction measurement conditions)

X-ray source: synchrotron radiation
Device condition: detector MYTHEN
Energy: 18.000 keV (wavelength: 0.68881 Å)
Camera length: 573 mm
Measured peaks: six or more peaks including at least four or more diffraction peaks of each orientation plane of (111), (200), (220), (311), (400), and (331) of cubic boron nitride, and two diffraction peaks of each orientation plane of (422) and (531). However, when it is difficult to obtain a profile due to aggregate structure and orientation, the peak of the plane index is excluded.
Measurement conditions: At least five measurement points are set in the half width. The basic configuration of the present measurement is as described above, and at least the synchrotron radiation needs to be used from the necessity of calculating the lattice constant with high accuracy. However, there is no problem as long as the configuration is such that the X-ray diffraction profile of the orientation plane can be obtained, and the present embodiment is not limited by the measurement conditions described above.

<Calculation Method>

In the obtained line profile by the X-ray diffraction measurement, the value of a diffraction angle $2\theta$ obtained is shifted depending on the wavelength $\lambda$ of the used synchrotron radiation. Therefore, first, a standard sample for calculating the wavelength $\lambda$ of the synchrotron radiation is measured to calculate the wavelength $\lambda$. The procedure is as follows.

X-ray diffraction measurement is performed on the sealed standard sample filled with cerium oxide under the X-ray diffraction measurement conditions described above to line profiles of seven diffraction peaks of the orientation planes of (111), (200), (220), (311), (222), (400), and (331) of cerium oxide. The obtained line profile is fitted by the sum of a pseudo Voigt function and a background consisting of a linear function, and the center value $2\theta_0$ of the pseudo Voigt function is obtained for each orientation plane. Seven points are plotted on each of the orientation planes (hkl), where the x-axis is $h^2 + k^2 + l^2$ and the y-axis is $\sin 2\theta$, and an inclination $\alpha$ of a straight line obtained by fitting the seven points with the linear function is obtained. The wavelength $\lambda$ is calculated from the following formula (1), assuming that the lattice constant of ceric oxide $a_0 = 0.541128$ nm.

$$\lambda = 2a_0\sqrt{\alpha} \quad (1)$$

After the wavelength $\lambda$ of the synchrotron radiation is calculated, the lattice constant a of the cubic boron nitride grains sealed in the sealed test specimen is calculated as follows. The line profile of six or more diffraction peaks including at least four or more diffraction peaks of each orientation plane of (111), (200), (220), (311), (400), and (331) of cubic boron nitride and two diffraction peaks of each orientation plane of (422) and (531) is obtained. The line profile is fitted by the sum of a pseudo Voigt function and the background consisting of the linear function, and the center value $2\theta0$ of the pseudo Voigt function is obtained for each orientation plane. An inclination $\beta$ of a straight line obtained by plotting the respective orientation planes (hkl) with $h2 + k2 + l2$ as the x-axis and $\sin2\theta$ as the y-axis and then fitting the plot with a linear function is obtained. As the lattice constant a of the specimen, the lattice constant a of the cubic boron nitride grains enclosed in the specimen is calculated from the following formula (2).

$$a = \lambda/(2\sqrt{\beta})\ (2)$$

It was confirmed that even when the lattice constant of the cBN grains in the cBN sintered material was measured and calculated a plurality of times in the same sample according to the measurement method and the calculation method described above, the obtained lattice constant was the same.

<Composition>

In the cubic boron nitride sintered material of the embodiment, the cubic boron nitride grain includes cubic boron nitride as a main component. Here, the cubic boron nitride grain including cubic boron nitride as a main component means that the cubic boron nitride content ratio in the cubic boron nitride grain is 99 mass% or more. The content ratio of the components other than cubic boron nitride in the cubic boron nitride sintered material of the embodiment is preferably 1 mass% or less, more preferably 0.5 mass% or less, and still more preferably 0.2 mass% or less. As components other than cubic boron nitride, silicon, oxygen, lithium, magnesium, calcium, and the like can be given.

The content ratio of components (silicon, lithium, magnesium, calcium and the like) other than cubic boron nitride in the cubic boron nitride grains can be measured by high-frequency induction plasma emission spectrometry (ICP method). In detail, the measurement can be performed by the same method as a measurement method of silicon content ratio to be described below.

The oxygen content ratio in the cubic boron nitride grain is measured by gas analysis (measuring device: "EMGA-920" manufactured by HORIBA, Ltd.).

«Silicon Content Ratio»

In the cubic boron nitride sintered material of the embodiment, the silicon content ratio in the cubic boron nitride grain is 0.02 mass% or less. According to this, the thermal conductivity of the cBN grain is increased. Therefore, in the cBN sintered material including the cBN grains, the occurrence of crater wear due to cutting heat generated during cutting and the occurrence of fracture due to the development of a crater are suppressed, and the tool life is improved.

The upper limit of the silicon content ratio in the cBN grain is 0.02 mass% or less, preferably 0.01 mass% or less, and more preferably 0.001 mass% or less, from the viewpoint of improving thermal conductivity. Since the silicon content ratio in the cBN grains is preferably as small as possible, the lower limit is not particularly limited. The lower limit of the silicon content ratio in the cBN grain can be set to, for example, 0 mass% or more. The silicon content ratio in the cBN grain is preferably 0 mass% to 0.02 mass%, more preferably 0 mass% to 0.01 mass%, and still more preferably 0 mass% to 0.001 mass%. The cBN grains can be produced by adding a catalyst (Li, Ca, Mg, and nitrides, borides, and carbonitrides thereof) to hexagonal boron nitride powder, and then heating and pressurizing the mixture. At this time, Si is added in addition to the catalyst in order to promote the growth of the cBN grains. Therefore, silicon may be included as an inevitable impurity in the cBN grain. In consideration of this point, the lower limit of the silicon content ratio in the cBN grains can be set to, for example, more than 0 mass%. The silicon content ratio in the cBN grains is preferably more than 0 mass% and 0.02 mass% or less, more preferably more than 0 mass% and 0.01 mass% or less, and still more preferably more than 0 mass% and 0.001 mass% or less.

The measurement method of the silicon content ratio in the cubic boron nitride grains is as follows. The cubic boron nitride sintered material is immersed in hydrofluoric-nitric acid (hydrofluoric acid (concentration: 60 mass%) : nitric acid (concentration: 70 mass%) = 5:5 (volume ratio)) in a pressure vessel. As a result, all the binder is dissolved in the hydrofluoric-nitric acid, and only the cBN grains remain. After the cBN grains are dissolved by a molten-salt method, high-frequency induction plasma emission spectrometry (ICP method) (measuring device: Thermo Fischer iCAP6500) is performed to quantitatively measure the silicon content ratio in the cBN grains.

(Median Diameter d50)

Median diameter d50 (hereinafter, also referred to as "median diameter d50") of the circle equivalent diameters of the cubic boron nitride grains included in the cubic boron nitride sintered material of the embodiment is not particularly limited, but is preferably 1 nm to 15000 nm, more preferably 10 nm to 12000 nm, and still more preferably 100 nm to 10000 nm, for example. According to this, a tool using the cubic boron nitride sintered material can have a long tool life.

In the present specification, the median diameter d50 (the circle equivalent diameter at which the cumulative frequency based on the number is 50%) of the circle equivalent diameters of the cubic boron nitride grains is measured by the following method. In the same procedure as measurement method of the content ratio of the cubic boron nitride grains in the cubic boron nitride sintered material, the reflected electron image of the cross section of the cubic boron nitride sintered material is binarized to extract the cubic boron nitride grains. The observation magnification is 5000 times. A measurement region (15 $\mu$m $\times$ 20 $\mu$m) is set in the image after the binarization processing. In the measurement region, the distribution of the circle equivalent diameters of the cubic boron nitride grains is calculated using the image analysis software. From the distribution of the circle equivalent diameters of the cubic boron nitride grains, the median diameter d50 of the circle equivalent diameters of the cubic boron nitride grains in the measurement visual field is calculated. The measurement of the median diameter d50 of the circle equivalent diameters is performed in five different measurement regions. The average of the measured values of the five measurement regions is defined as the median diameter d50 of the circle equivalent diameters of the cubic boron nitride grains in the cubic boron nitride sintered material of the embodiment.

As far as the applicant measured, as long as the median diameters d50 of the cubic boron nitride grains were measured in the same sample, there was almost no variation in the measurement results even when the selected portion of the measurement visual field in the cubic boron nitride sintered material was changed and calculated multiple times. It was confirmed that even if the measurement field of view is arbitrarily set, the measurement results are not intentional.

<<Binder>>

The cBN sintered material of the embodiment can include a binder. The binder serves to enable the cBN grains, which are a sintering-resistant material, to be sintered at an industrial pressure and temperature. Further, since the reactivity with iron is lower than that of cBN, the function of suppressing chemical wear and thermal wear is added particularly in cutting of high hardness hardened steel. Further, when the cBN sintered material includes a binder, the wear resistance and fracture resistance in high-efficiency machining of a high-hardness hardened steel in particular are improved.

In the cBN sintered material of the embodiment, the binder includes at least one selected from a group consisting of a compound and a solid solution of the compound, the compound consisting of at least one element selected from a group consisting of a group 4 element, a group 5 element, a group 6 element in the periodic table, aluminum, silicon, iron, cobalt, and nickel and at least one element selected from a group consisting of carbon, nitrogen, boron, and oxygen. That is, the binder includes at least one selected from the group consisting of the above compound and solid solution of the above compound. The binder has a high bonding force to the cBN grains. Therefore, the cubic boron nitride sintered material has excellent fracture resistance, and the tool using the cubic boron nitride sintered material has a long life.

In the present specification, the group 4 element in the periodic table includes titanium (Ti), zirconium (Zr), and hafnium (Hf). The group 5 element in the periodic table includes vanadium (V), niobium (Nb), and tantalum (Ta). The group 6 element in the periodic table includes chromium (Cr), molybdenum (Mo), and tungsten (W). Hereinafter, an element included in the group 4 element, group 5 element, group 6 element in the periodic table, aluminum, silicon, iron, cobalt, and nickel is also referred to as "first element".

Examples of the compound (carbide) composed of the first element and carbon include titanium carbide (TiC), zirconium carbide (ZrC), hafnia carbide (HfC), vanadium carbide (VC), niobium carbide (NbC), tantalum carbide (TaC), chromium carbide ($Cr_3C_2$), molybdenum carbide (MoC), tungsten carbide (WC), silicon carbide (SiC), and tungsten carbide cobalt ($W_2Co_3C$).

Examples of the compound (nitride) composed of the first element and nitrogen include titanium nitride (TiN), zirconium nitride (ZrN), hafnium nitride (HfN), vanadium nitride (VN), niobium nitride (NbN), tantalum nitride (TaN), chromium nitride ($Cr_2N$), molybdenum nitride (MoN), tungsten nitride (WN), aluminum nitride (AlN), silicon nitride ($Si_3N_4$), cobalt nitride (CoN), nickel nitride (NiN), titanium zirconium nitride (TiZrN), titanium hafnium nitride (TiHfN), titanium vanadium nitride (TiVN), titanium niobium nitride (TiNbN), titanium tantalum nitride (TiTaN), titanium chromium nitride (TiCrN), titanium molybdenum nitride (TiMoN), titanium tungsten nitride (TiWN), titanium aluminum nitride (TiAlN, $Ti_2AlN$, or $Ti_3AlN$), zirconium hafnium nitride (ZrHfN), zirconium vanadium nitride (ZrVN), zirconium niobium nitride (ZrNbN), zirconium tantalum nitride (ZrTaN), zirconium chromium nitride (ZrCrN), zirconium molybdenum nitride (ZrMoN), zirconium tungsten nitride (ZrWN), hafnium vanadium nitride (HfVN), hafnium niobium nitride (HfNbN), hafnium tantalum nitride (HfTaN), hafnium chromium nitride (HfCrN), hafnium molybdenum nitride (HfMoN), hafnium tungsten nitride (HfWN), vanadium niobium nitride (VNbN), vanadium tantalum nitride (VTaN), vanadium chromium nitride (VCrN), vanadium molybdenum nitride (VMoN), vanadium tungsten nitride (VWN), niobium tantalum nitride (NbTaN), niobium chromium nitride (NbCrN), niobium molybdenum nitride (NbMoN), niobium tungsten nitride (NbWN), tantalum chromium nitride (TaCrN), tantalum molybdenum nitride (TaMoN), tantalum tungsten nitride (TaWN), chromium molybdenum nitride (CrMoN), chromium tungsten nitride (CrWN), and molybdenum chromium nitride (MoCrN).

Examples of the compound (boride) composed of the first element and boron include titanium boride ($TiB_2$), zirconium boride ($ZrB_2$), hafnium boride ($HfB_2$), vanadium boride ($VB_2$), niobium boride ($NbB_2$), tantalum boride ($TaB_2$), chromium boride (CrB), molybdenum boride (MoB), tungsten boride (WB), aluminum boride ($AlB_2$), cobalt boride ($Co_2B$), and nickel boride ($Ni_2B$).

Examples of the compound (oxide) composed of the first element and oxygen include titanium oxide ($TiO_2$), zirconium oxide ($ZrO_2$), hafnium oxide ($HfO_2$), vanadium oxide ($V_2O_5$), niobium oxide ($Nb_2O_5$), tantalum oxide ($Ta_2O_5$), chromium oxide ($Cr_2O_3$), molybdenum oxide (MoOs), tungsten oxide ($WO_3$), aluminum oxide ($Al_2O_3$), silicon oxide ($SiO_2$), cobalt oxide (CoO), and nickel oxide (NiO).

Examples of the compound (carbonitride) composed of the first element, carbon, and nitrogen include titanium carbonitride (TiCN), zirconium carbonitride (ZrCN), hafnium carbonitride (HfCN), titanium niobium carbonitride (TiNbCN), titanium zirconium carbonitride (TiZrCN), titanium hafnium carbonitride (TiHfCN), titanium tantalum carbonitride (Ti-TaCN), and titanium chromium carbonitride (TiCrCN).

Examples of the compound (oxynitride) composed of the first element, oxygen, and nitrogen include titanium oxynitride (TiON), zirconium oxynitride (ZrON), hafnium oxynitride (HfON), vanadium oxynitride (VON), niobium oxynitride (NbON), tantalum oxynitride (TaON), chromium oxynitride (CrON), molybdenum oxynitride (MoON), tungsten oxynitride (WON), aluminum oxynitride (AlON), and silicon oxynitride (SiON).

The solid solution of the compound means a state in which two or more kinds of compounds are dissolved in each other's crystal structure, and means an interstitial solid solution or a substitutional solid solution.

One of the compounds may be used or two or more of the compounds may be used in combination.

The binder may include other components in addition to the above-mentioned compounds. Examples of elements constituting the other components include manganese (Mn) and rhenium (Re).

The lower limit of the total content ratio of the compound and the solid solution of the compound in the binder is preferably 50 volume% or more, more preferably 60 volume% or more, and still more preferably 70 volume% or more. The total content ratio of the above compound and solid solution of the compound in the binder is not particularly limited, as the higher the content ratio is, the more desirable it is, and the total content ratio can be, for example, 100 volume% or less. The total content ratio of the compound and the solid solution of the compound in the binder is preferably 50 volume% to 100 volume%, more preferably 60 volume% to 100 volume%, and still more preferably 70 volume% to 100 volume%.

The composition of the binder included in the cBN sintered material can be identified by XRD (X-ray diffraction measurement, X-ray Diffraction).

The total content ratio of the compound and the solid solution of the compound in the binder is measured by RIR method (Reference Intensity Ratio) using XRD.

<Applications>

The cubic boron nitride sintered material of the embodiment is suitably used for a cutting tool, a wear-resistant tool, a grinding tool, or the like.

Each of the cutting tool, the wear resistant tool and the grinding tool using the cubic boron nitride sintered material of the present disclosure may be entirely constituted of the cubic boron nitride sintered material, or only a portion thereof (for example, at least a cutting edge portion in the case of the cutting tool) may be constituted of the cubic boron nitride sintered material. Further, a coating film may be formed on a surface of each tool.

Examples of the cutting tool include a drill, an end mill, an indexable cutting insert for drill, an indexable cutting insert for end mill, an indexable cutting insert for milling, an indexable cutting insert for turning, a metal saw, a gear cutting tool, a reamer, a tap, and a cutting bite , and the like.

Examples of the wear resistant tool include a die, a scriber, a scribing wheel, a dresser, and the like. Examples of the grinding tool include a grinding stone and the like.

[Second Embodiment: Method of Producing Cubic Boron Nitride Sintered Material]

The cubic boron nitride sintered material of the embodiment can be produced by, for example, the following method.

<<Preparation of Cubic Boron Nitride Powder>>

Cubic boron nitride powder (hereinafter, also referred to as cBN powder) is a raw material powder of cBN grains included in the cBN sintered material. The cBN powder may be produced by adding a catalyst (Li, Ca, Mg, and nitrides, borides, and carbonitrides thereof) to hexagonal boron nitride powder and then pressurizing and heating the mixture, or a commercially available cBN powder may be prepared. The d50 (average grain size) of the cBN powder is not particularly limited, and can be set to, for example, 0.1 to 12.0 μm.

First, electron beam irradiation is performed on the cBN powder. The conditions of the electron beam irradiation can be, for example, an irradiation energy of 25 to 30 MeV and an irradiation time of 10 to 24 hours.

The cBN powder after the electron beam irradiation is subjected to a pressure and heat treatment. The pressure and heat treatment can be performed using an ultra-high pressure and high temperature generation apparatus. The ultra-high pressure and high temperature generation apparatus can be of a belt type, a multi-anvil type, a cubic type, or the like, depending on a desired generation pressure region. The pressure of pressure and heat treatment can be performed at 5 to 15 GPa, at a temperature of 1000 to 2000 °C, and for a retention time of 1 to 60 minutes.

By performing the electron beam irradiation and the pressure and heat treatment, the lattice constant of the cBN grains is reduced to 3.6161 Å or less.

Next, the cBN powder after the pressure and heat treatment is subjected to a heat treatment at an oxygen partial pressure of $1 \times 10^{-29}$ atm or less and at 800 to 1300 °C for 10 to 60 minutes (hereinafter, this step is also referred to as "heat treatment under low oxygen")). This can reduce the silicon content ratio in the cBN grains.

In the above, an example is shown in which the pressure and heat treatment and the heat treatment under low oxygen are performed in this order after the electron beam irradiation, but the order of the pressure and heat treatment and the heat treatment under low oxygen is not limited to the above order. After the electron beam irradiation, heat treatment under low oxygen may be performed, and then the pressure and heat treatment may be performed.

<<Preparation of Binder Raw Material Powder>>

When the cubic boron nitride sintered material includes a binder, a binder raw material powder is prepared. The binder raw material powder is a raw material powder of the binder included in the cBN sintered material. The binder raw material powder can include a compound consisting of at least one element selected from a group consisting of a group 4 element, a group 5 element, and a group 6 element in the periodic table, aluminum, silicon, iron, cobalt, and nickel and at least one element selected from a group consisting of carbon, nitrogen, boron and oxygen.

The binder raw material powder can be prepared, for example, as follows. TiN and Al are mixed and heat treatment is performed in vacuum at 1200 °C for 30 minutes to obtain a compound. The compound is pulverized to produce a binder raw material powder. In the binder raw material powder, peaks of TiN, $Ti_2AlN$, $TiAl_3$, and the like are confirmed by X-ray diffraction (XRD) measurement.

The method of mixing and pulverizing each powder is not particularly limited, but mixing and pulverization with media such as balls, jet mill mixing, and pulverization are preferred from the viewpoint of efficient and homogeneous mixing. The mixing and pulverization methods may be either wet or dry.

<<Mixing Step>>

When the cubic boron nitride sintered material includes a binder, the cBN powder and the binder raw material powder prepared above are mixed by wet ball mill mixing using ethanol, acetone, or the like as a solvent to produce a mixed powder. The solvent is removed by natural drying after mixing. After that, heat treatment is performed to volatilize impurities such as moisture adsorbed on the surface of the mixed powder, so that the surface of the mixed powder is cleaned.

<<Sintering Step>>

When the cubic boron nitride sintered material includes a binder, the mixed powder is filled in a Ta (tantalum) container in a state where the mixed powder is in contact with a WC-6% Co cemented carbide disk, and then the container is vacuum-sealed. When the cubic boron nitride sintered material consists of only cubic boron nitride grains, the cBN powder prepared above is filled in a Ta (tantalum) container in a state of where the cBN powder prepared above is in contact with a WC-6% Co cemented carbide disk, and then the container is vacuum-sealed. The vacuum-sealed mixed powder or the cBN powder is sintered for 5 to 30 minutes under conditions of 3 to 12 GPa and 1100 to 2200 °C using a belt-type ultra-high pressure and high temperature generation apparatus. Thus, the cubic boron nitride sintered material of the embodiment is produced.

[Appendix 1]

The cubic boron nitride sintered material of the present disclosure preferably consists of 35 volume% to 100 volume% of a cubic boron nitride grain and 0 volume% to 65 volume% of a binder.

The cubic boron nitride sintered material of the present disclosure preferably consists of 35 volume% or more and less than 100 volume% of a cubic boron nitride grain and more than 0 volume% and 65 volume% or less of a binder.

The cubic boron nitride sintered material of the present disclosure preferably consists of 35 volume% or more and less than 98 volume% of a cubic boron nitride grain and more than 2 volume% and 65 volume% or less of a binder.

The cubic boron nitride sintered material of the present disclosure preferably consists of 40 volume% to 85 volume% of a cubic boron nitride grain and 15 volume% to 60 volume% of a binder.

The cubic boron nitride sintered material of the present disclosure preferably consists of 45 volume% to 80 volume% of a cubic boron nitride grain and 20 volume% to 55 volume% of a binder.

The cubic boron nitride sintered material of the present disclosure preferably consists of a cubic boron nitride grain.

[Appendix 2]

The cubic boron nitride sintered material of the present disclosure preferably consists of a cubic boron nitride grain, a binder, and an inevitable impurity, and contains 35 volume% to 100 volume% of the cubic boron nitride grain and 0 volume% to 65 volume% of the binder.

The cubic boron nitride sintered material of the present disclosure preferably consists of a cubic boron nitride grain, a binder, and an inevitable impurity, and contains 35 volume% or more and less than 100 volume% of the cubic boron nitride grain and more than 0 volume% and 65 volume% or less of the binder.

The cubic boron nitride sintered material of the present disclosure preferably consists of a cubic boron nitride grain, a binder, and an inevitable impurity, and contains 35 volume% or more and less than 98 volume% of the cubic boron nitride grain and more than 2 volume% and 65 volume% or less of the binder.

The cubic boron nitride sintered material of the present disclosure preferably consists of a cubic boron nitride grain, a binder, and an inevitable impurity, and contains 40 volume% to 85 volume% of the cubic boron nitride grain and 15 volume% to 60 volume% of the binder.

The cubic boron nitride sintered material of the present disclosure preferably consists of a cubic boron nitride grain, a binder, and an inevitable impurity, and contains 45 volume% to 80 volume% of the cubic boron nitride grain and 20 volume% to 55 volume% of the binder.

The cubic boron nitride sintered material of the present disclosure preferably consists of a cubic boron nitride grain and an inevitable impurity.

[Appendix 3]

In the cubic boron nitride sintered material of the present disclosure, the silicon content ratio in the cubic boron nitride grain is preferably more than 0 mass% and 0.02 mass% or less.

In the cubic boron nitride sintered material of the present disclosure, the silicon content ratio in the cubic boron nitride grain is preferably more than 0 mass% and 0.01 mass% or less.

In the cubic boron nitride sintered material of the present disclosure, the silicon content ratio in the cubic boron nitride grain is preferably more than 0 mass% and 0.001 mass% or less.

[Example]

The present embodiment will be described more specifically by way of Examples. However, the present embodiment is not limited to these Examples.

[Test 1]

<<Preparation of Cubic Boron Nitride Powder>>

A known cubic boron nitride powder (d50 (average grain size) 3.2 $\mu$m) was prepared. The cBN powder was subjected to at least one of electron beam irradiation, pressure and heat treatment, and heat treatment under low oxygen. When two or more of the electron beam irradiation, the pressure and heat treatment, and the heat treatment under low oxygen were performed, and the treatments were performed in the order described above.

The conditions of the electron beam irradiation are as shown in the columns of "energy (MeV)" and "time (hr)" of "electron beam irradiation" in Table 1. For example, in Sample 1, the cBN powder was irradiated with an electron beam at an irradiation energy of 27 MeV for an irradiation time of 15 hours. The conditions of the pressure and heat treatment are as shown in the columns of "pressure (GPa)", "temperature (°C)" and "time (min)" of "pressure and heat treatment" in Table 1. For example, in Sample 1, the cBN powder was subjected to a pressure and heat treatment at a temperature of 1400 °C for 30 minutes under a pressurized 6 GPa. The conditions of the heat treatment under low oxygen are as shown in the columns of "oxygen partial pressure", "temperature (°C)" and "time (min)" of "heat treatment under low oxygen" in Table 1. For example, in Sample 1, the cBN powder was performed heat treatment at a partial pressure of oxygen of $1 \times 10^{-30}$ atm and a temperature of 1000 °C for 30 minutes. Note that the symbol "-" in Table 1 indicates that the corresponding step was not performed.

<<Preparation of Binder Raw Material Powder>>

The binder raw material powder was prepared by the following procedure.

<Sample 1 to Sample 7, Sample 13 to Sample 19, Sample 1-1 to Sample 1-5, Sample 1-7 to Sample 1-9>

A TiN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 8>

A TiCN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 9, Sample 1-6>

A WC powder, a Co powder, and an Al powder were mixed at the mass ratio of 3:8:1, and the mixture was subjected to heat treatment at 1200 °C for 30 minutes in a vacuum atmosphere, and then mixed and pulverized by a wet ball mill to obtain a binder raw material powder.

<Sample 10>

A $TiO_2$ powder, an $Nb_2O_5$ powder, and a C powder were mixed at the mass ratio of 57.19:16.79:26.02, and the mixture was subjected to heat treatment at 2100 °C for 60 minutes under a nitrogen atmosphere to synthesize a single-phase compound having a TiNbCN composition. The single-phase compound was pulverized to a grain size of 0.5 $\mu$m by a wet pulverization method to obtain a TiNbCN powder. The TiNbCN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 11>

A $TiO_2$ powder, a $ZrO_2$ powder, and a C powder were mixed at the mass ratio of 58.35:15.88:25.77, and the mixture was subjected to heat treatment at 2100 °C for 60 minutes under a nitrogen atmosphere to synthesize a single-phase compound having a TiZrCN composition. The single-phase compound was pulverized to a grain size of 0.5 $\mu$m by a wet pulverization method to obtain a TiZrCN powder. The TiZrCN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 12>

A $TiO_2$ powder, an $HfO_2$ powder, and a C powder were mixed at the mass ratio of 52.45:24.38:23.17, and the mixture was subjected to heat treatment at 2100 °C for 60 minutes under a nitrogen atmosphere to synthesize a single-phase compound having a TiHfCN composition. The single-phase compound was pulverized to a grain size of 0.5 $\mu$m by a wet pulverization method to obtain a TiHfCN powder. The TiHfCN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 20>

A TiO$_2$ powder, a Ta$_2$O$_5$ powder, and a C powder were mixed at the mass ratio of 51.47:25.12:23.42, and the mixture was subjected to heat treatment at 2100 °C for 60 minutes under a nitrogen atmosphere to synthesize a single-phase compound having a TiTaCN composition. The single-phase compound was pulverized to a grain size of 0.5 μm by a wet pulverization method to obtain a TiTaCN powder. The TiTaCN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 21>

A TiO$_2$ powder, a Cr$_2$O$_3$ powder, and a C powder were mixed at the mass ratio of 62.64:10.51:26.84, and the mixture was subjected to heat treatment at 2100 °C for 60 minutes under a nitrogen atmosphere to synthesize a single-phase compound having a TiCrCN composition. The single-phase compound was pulverized to a grain size of 0.5 μm by a wet pulverization method to obtain a TiCrCN powder. The TiCrCN powder and an Al powder were mixed at the mass ratio of 85:15, and the mixture was subjected to heat treatment at 1200 °C for 30 minutes in a vacuum atmosphere, and then mixed and pulverized by a wet ball mill to obtain a binder raw material powder.

<Sample 22>

A WC powder, a Co powder, and an Al powder were prepared at the mass ratio of 3:8:1. A Zr powder was added to the WC powder, the Co powder and the Al powder so as to be 5 mass% of the total, and mixed, and the mixture was subjected to heat treatment at 1200 °C for 30 minutes in vacuum, and then the mixture was mixed and pulverized by a wet ball mill to produce a binder raw material powder including WC, Co, Al and Zr.

<Sample 23>

A cBN sintered material was produced in the same manner as in the case of Sample 22, except that an Ni powder and an Nb powder were added instead of the Zr powder in the production of the binder raw material powder. A mass ratio of the Ni powder to the Nb powder was Ni: Nb = 1:1.

<Sample 24>

A cBN sintered material was produced in the same manner as in the case of Sample 22, except that a Zr powder was not added when a binder raw material powder was produced, and a CrN powder was added when a cBN powder and a binder powder were mixed. The amount of the CrN powder added was adjusted so that the content ratio thereof in the entire binder was 5 mass%. The CrN powder was obtained by treating Cr$_2$N (manufactured by JAPAN NEW METALS CO.,LTD.) in a nitrogen atmosphere in 300 kPa at 900 °C for 3 hours.

<Sample 25>

A binder raw material powder was not used, and in the sintering step described later, a cBN powder was filled in a Ta (tantalum) container in a state of being sandwiched between Al plates, and sintered.

<<Mixing Step>>

In the sample using a binder raw material powder, the cBN powder subjected to at least one of the electron beam irradiation, the pressure and heat treatment, and the heat treatment under low oxygen was mixed with the binder raw material powder, and the mixture was uniformly mixed by a wet ball mill method using ethanol to obtain a mixed powder. Thereafter, degassing treatment was performed at 900 °C under vacuum in order to remove impurities such as moisture on the surface. The mixing ratio of the cBN powder and the binder raw material powder when producing the mixed powder was adjusted so that the ratio (volume%) of the cBN grains and the binder in the cubic boron nitride sintered material was the ratio described in the "cBN grain (volume%)" and "binder (volume%)" columns of the "cBN sintered material" in Table 2.

<<Sintering Step>>

Next, in the sample using a binder raw material powder, a mixed powder was filled in a Ta (tantalum) container in a state where the mixed powder was in contact with a WC-6% Co cemented carbide disk, and then the container was vacuum-sealed. The pressure of the vacuum-sealed mixed powder was increased to 7 GPa at a pressure increase rate of 0.4 GPa/min using a belt-type ultra-high pressure and high temperature generation apparatus, and the mixed powder was sintered for 20 minutes under conditions of 7 GPa and 1700 °C, thereby obtaining a cBN sintered material of each of the samples. In Sample 25 in which the binder raw material powder was not used, a cBN sintered material was obtained by filling the cBN powder was filled in the Ta (tantalum) container in a state of being sandwiched between Al plates, and sintering the cBN powder.

[Table 1]

| Sample No. | Electron Beam Irradiation | | Pressure and Heat Treatment | | | Heat Treatment Under Low Oxygen | | |
|---|---|---|---|---|---|---|---|---|
| | Energy (MeV) | Time (hr) | Pressure (GPa) | Temperature (°C) | Time (Min) | Oxygen Partial Pressure | Temperature (°C) | Time (Min) |
| 1 | 27 | 15 | 6 | 1400 | 30 | $1\times10^{-30}$atm | 1000 | 30 |
| 2 | 27 | 15 | 7 | 1500 | 30 | $1\times10^{-30}$atm | 1000 | 30 |
| 3 | 27 | 15 | 8 | 1600 | 30 | $1\times10^{-29}$atm | 1000 | 10 |
| 4 | 27 | 15 | 8 | 1600 | 30 | $1\times10^{-29}$atm | 1000 | 30 |
| 5 | 27 | 15 | 8 | 1600 | 30 | $1\times10^{-30}$atm | 1000 | 30 |
| 6 | 27 | 15 | 8 | 1600 | 30 | $1\times10^{-30}$atm | 1000 | 30 |
| 7 | 27 | 15 | 8 | 1600 | 30 | $1\times10^{-30}$atm | 1000 | 30 |
| 8 | 27 | 15 | 8 | 1600 | 30 | $1\times10^{-30}$atm | 1000 | 30 |
| 9 | 27 | 15 | 8 | 1600 | 30 | $1\times10^{-30}$atm | 1000 | 30 |
| 10 | 27 | 15 | 8 | 1600 | 30 | $1\times10^{-30}$atm | 1000 | 30 |
| 11 | 27 | 15 | 8 | 1600 | 30 | $1\times10^{-30}$atm | 1000 | 30 |
| 12 | 27 | 15 | 8 | 1600 | 30 | $1\times10^{-30}$atm | 1000 | 30 |
| 13 | 30 | 20 | 9 | 1600 | 30 | $1\times10^{-29}$atm | 1000 | 10 |
| 14 | 30 | 20 | 10 | 1600 | 30 | $1\times10^{-29}$atm | 1000 | 10 |
| 15 | 30 | 20 | 12 | 1600 | 30 | $1\times10^{-29}$atm | 1000 | 10 |
| 16 | 27 | 15 | 8 | 1600 | 30 | $1\times10^{-29}$atm | 1000 | 10 |
| 17 | 27 | 15 | 8 | 1600 | 30 | $1\times10^{-29}$atm | 1000 | 10 |
| 18 | 27 | 15 | 8 | 1600 | 30 | $1\times10^{-29}$atm | 1000 | 10 |
| 19 | 27 | 15 | 6 | 1400 | 30 | $1\times10^{-29}$atm | 1000 | 10 |
| 20 | 27 | 15 | 6 | 1400 | 30 | $1\times10^{-29}$atm | 1000 | 10 |
| 21 | 27 | 15 | 6 | 1400 | 30 | $1\times10^{-29}$atm | 1000 | 10 |
| 22 | 27 | 15 | 6 | 1400 | 30 | $1\times10^{-29}$atm | 1000 | 10 |
| 23 | 27 | 15 | 6 | 1400 | 30 | $1\times10^{-29}$atm | 1000 | 10 |
| 24 | 27 | 15 | 6 | 1400 | 30 | $1\times10^{-29}$atm | 1000 | 10 |
| 25 | 27 | 15 | 8 | 1600 | 30 | $1\times10^{-30}$atm | 1000 | 30 |
| 1-1 | - | - | - | - | - | $1\times10^{-30}$atm | 1000 | 30 |
| 1-2 | 27 | 15 | 4 | 1300 | 30 | $1\times10^{-30}$atm | 1000 | 30 |
| 1-3 | 27 | 15 | 6 | 1400 | 30 | - | - | - |

(continued)

| Sample No. | Electron Beam Irradiation | | Pressure and Heat Treatment | | | Heat Treatment Under Low Oxygen | | |
|---|---|---|---|---|---|---|---|---|
| | Energy (MeV) | Time (hr) | Press ure (GPa) | Temperature (°C) | Time (Min) | Oxygen Partial Pressure | Temperature (°C) | Time (Min) |
| 1-4 | 27 | 15 | 8 | 1600 | 30 | - | - | - |
| 1-5 | - | - | - | - | - | - | - | - |
| 1-6 | 27 | 15 | 4 | 1300 | 30 | - | - | - |
| 1-7 | 27 | 15 | 8 | 1600 | 30 | $1\times10^{-29}$atm | 1000 | 30 |
| 1-8 | - | - | 6 | 1400 | 30 | $1\times10^{-29}$atm | 1000 | 30 |
| 1-9 | 27 | 15 | - | - | - | $1\times10^{-29}$atm | 1000 | 30 |

«Evaluation»

<Composition of cBN Sintered Material>

The content ratios (volume%) of the cBN grains and the binder in the cBN sintered material were measured. The specific measurement method is the same as the method described in the first embodiment, and thus the description thereof will not be repeated. In each of the samples, the content ratio (volume%) of the cBN grains in the cBN sintered material is shown in the column of "cBN grains (volume%)" of "cBN sintered material" in Table 2, and the content ratio (volume%) of the binder is shown in the column of "binder (volume%)" of "cBN sintered material" in Table 2.

<Composition of Binder>

The composition of the binder in the cBN sintered material was measured. The specific measurement method is the same as the method described in the first embodiment, and thus the description thereof is not repeated. The results are shown in the column of "binder" of "cBN sintered material" in Table 2. In all the samples, the total content ratio of the compounds described in the "binder" column of Table 2 in the binder was 50 volume% or more.

<Lattice Constant of cBN Grains>

The lattice constant of the cBN grains in the cBN sintered material was measured. The specific measurement method is the same as the method described in the first embodiment, and thus the description thereof is not repeated. The results are shown in the column of "lattice constant (Å) of cBN grains" of "cBN sintered material" in Table 2.

<Silicon Content Ratio of cBN Grains>

The silicon content ratio in the cBN grains in the cBN sintered material was measured. The specific measurement method is the same as the method described in the first embodiment, and thus the description thereof will not be repeated. The results are shown in the column of "Si content ratio (mass%) of cBN grains" of "cBN sintered material" in Table 2. In Table 2, the notation "< 0.001" means that the silicon content ratio is below the detection limit.

<Grain Size of cBN Grains>

The median diameter d50 of the circle equivalent diameters of the cBN grains in the cBN sintered material was measured. The specific measurement method is the same as the method described in the first embodiment, and thus the description thereof is not repeated. In all the samples, the median diameter d50 of the circle equivalent diameters of the cBN grains was in a range of 1 nm to 15,000 nm.

<Cutting Test>

A cutting tool (base material shape: CNGA120408) was produced using the cBN sintered material of each of the samples. Using this, a cutting test was conducted under the following cutting conditions. The following cutting conditions correspond to high-speed, high-efficiency machining of hardened steel.

Cutting speed: 200 m/min.

Feed speed: 0.2 mm/rev.

Cutting depth: 0.2 mm

Coolant: DRY

Cutting method: intermittent cutting

Lathe: LB400 (manufactured by Okuma Corporation)

Workpiece: hardened steel (SCM415 V-groove, hardness HRC60)

Evaluation method: The cutting edge was observed for each 0.5 km, and the presence or absence of chipping of the cutting edge was confirmed. The cut length at the time when a fracture of 0.2 mm or more occurred was measured, and this cut length was defined as the life of the cutting tool. The results are shown in the column "tool life (km)" in Table 1.

[Table 2]

| Sample No. | cBN Sintered Material | | | | | Tool Life (km) |
|---|---|---|---|---|---|---|
| | cBN Grain (Volume%) | Binder (Volume%) | Binder | Lattice Constant of cBN Grain (Å) | Si Content in cBN Grain (Mass%) | |
| 1 | 70 | 30 | TiN, TiB$_2$, AlN, Al$_2$O$_3$ | 3.6161 | <0.001 | 4.5 |
| 2 | 70 | 30 | TiN, TiB$_2$, AlN, Al$_2$O$_3$ | 3.6158 | <0.001 | 4.8 |
| 3 | 70 | 30 | TiN, TiB$_2$, AlN, Al$_2$O$_3$ | 3.6155 | 0.02 | 4.3 |
| 4 | 70 | 30 | TiN, TiB$_2$, AlN, Al$_2$O$_3$ | 3.6155 | 0.01 | 4.9 |
| 5 | 70 | 30 | TiN, TiB$_2$, AlN, Al$_2$O$_3$ | 3.6155 | <0.001 | 5.7 |
| 6 | 35 | 65 | TiN, TiB$_2$, AlN, Al$_2$O$_3$ | 3.6155 | <0.001 | 4.2 |
| 7 | 90 | 10 | TiN, TiB$_2$, AlN, Al$_2$O$_3$ | 3.6155 | <0.001 | 4.0 |
| 8 | 35 | 65 | TiCN, TiB$_2$, AlN, Al$_2$O$_3$ | 3.6155 | <0.001 | 4.4 |
| 9 | 80 | 20 | WC, Co, Al | 3.6155 | <0.001 | 4.7 |
| 10 | 70 | 30 | TiNbCN, TiB$_2$, AlN, Al$_2$O$_3$ | 3.6155 | <0.001 | 5.3 |

(continued)

| Sample No. | cBN Sintered Material | | | | | Tool Life (km) |
|---|---|---|---|---|---|---|
| | cBN Grain (Volume%) | Binder (Volume%) | Binder | Lattice Constant of cBN Grain (Å) | Si Content in cBN Grain (Mass%) | |
| 11 | 70 | 30 | TiZrCN, TiB$_2$, AlN, Al$_2$O$_3$ | 3.6155 | <0.001 | 5.2 |
| 12 | 70 | 30 | TiHfCN, TiB$_2$, AlN, Al$_2$O$_3$ | 3.6155 | <0.001 | 5.0 |
| 13 | 70 | 30 | TiN, TiB$_2$, AlN, Al$_2$O$_3$ | 3.6150 | 0.02 | 4.4 |
| 14 | 70 | 30 | TiN, TiB$_2$, AlN, Al$_2$O$_3$ | 3.6145 | 0.02 | 4.3 |
| 15 | 70 | 30 | TiN, TiB$_2$, AlN, Al$_2$O$_3$ | 3.6140 | 0.02 | 4.2 |
| 16 | 40 | 60 | TiN, TiB$_2$, AlN, Al$_2$O$_3$ | 3.6155 | 0.02 | 4.1 |
| 17 | 45 | 55 | TiN, TiB$_2$, AlN, Al$_2$O$_3$ | 3.6155 | 0.02 | 4.2 |
| 18 | 85 | 15 | TiN, TiB$_2$, AlN, Al$_2$O$_3$ | 3.6155 | 0.02 | 4.3 |
| 19 | 80 | 20 | TiN, TiB$_2$, AlN, Al$_2$O$_3$ | 3.6155 | 0.02 | 4.5 |
| 20 | 70 | 30 | TiTaCN, TiB$_2$, AlN, Al$_2$O$_3$ | 3.6161 | 0.02 | 4.3 |
| 21 | 70 | 30 | TiCrCN, TiB$_2$, AlN, Al$_2$O$_3$ | 3.6161 | 0.02 | 4.4 |
| 22 | 85 | 15 | WC, Co, Al$_2$O$_3$, Zr | 3.6161 | 0.02 | 4.3 |
| 23 | 85 | 15 | WC, Co, Al$_2$O$_3$, Ni, Nb | 3.6161 | 0.02 | 4.3 |
| 24 | 85 | 15 | WC, Co, Al$_2$O$_3$, CrN | 3.6161 | 0.02 | 4.2 |
| 25 | 85 | 15 | AlN, AlB$_2$ | 3.6155 | <0.001 | 4.2 |
| 1-1 | 70 | 30 | TiN, TiB$_2$, AlN, Al$_2$O$_3$ | 3.6165 | <0.001 | 3.1 |
| 1-2 | 70 | 30 | TiN, TiB$_2$, AlN, Al$_2$O$_3$ | 3.6162 | <0.001 | 3.8 |

(continued)

| Sample No. | cBN Sintered Material | | | | | Tool Life (km) |
|---|---|---|---|---|---|---|
| | cBN Grain (Volume%) | Binder (Volume%) | Binder | Lattice Constant of cBN Grain (Å) | Si Content in cBN Grain (Mass%) | |
| 1-3 | 70 | 30 | TiN, $TiB_2$, AlN, $Al_2O_3$ | 3.6161 | 0.05 | 2.8 |
| 1-4 | 70 | 30 | TiN, $TiB_2$, AlN, $Al_2O_3$ | 3.6155 | 0.05 | 3.7 |
| 1-5 | 70 | 30 | TiN, $TiB_2$, AlN, $Al_2O_3$ | 3.6165 | 0.05 | 2.5 |
| 1-6 | 80 | 20 | WC, Co, Al | 3.6162 | 0.05 | 2.5 |
| 1-7 | 30 | 70 | TiN, $TiB_2$, AlN, $Al_2O_3$ | 3.6155 | 0.01 | 2.4 |
| 1-8 | 70 | 30 | TiN, $TiB_2$, AlN, $Al_2O_3$ | 3.6163 | 0.01 | 3.5 |
| 1-9 | 70 | 30 | TiN, $TiB_2$, AlN, $Al_2O_3$ | 3.6164 | 0.01 | 3.3 |

<Consideration>

Sample 1 to Sample 25 correspond to Examples, and Sample 1-1 to Sample 1-9 correspond to Comparative Examples. It was confirmed that the tool life of each of Sample 1 to Sample 25 (Examples) was longer than that of each of Sample 1-1 to Sample 1-9 (Comparative Examples) in high-efficiency machining.

[Test 2]

<<Preparation of Cubic Boron Nitride Powder»

A known cubic boron nitride powder (d50 (average grain size) 3.2 $\mu$m) was prepared. The cBN powder was subjected to at least one of electron beam irradiation, pressure and heat treatment, and heat treatment under low oxygen. When two or more of the electron beam irradiation, the pressure and heat treatment, and the heat treatment under low oxygen were performed, the treatments were performed in the order described above.

The conditions of the electron beam irradiation are as shown in the columns of "energy (MeV)" and "time (hr)" of "electron beam irradiation" in Table 3. The conditions of the pressure and heat treatment are as shown in the columns of "pressure (GPa)", "temperature (°C)" and "time (min)" of "pressure and heat treatment" in Table 3. The conditions of the heat treatment under low oxygen are as shown in the columns of "oxygen partial pressure", "temperature (°C)" and "time (min)" of "heat treatment under low oxygen" in Table 3. Note that the symbol "-" in Table 3 indicates that the corresponding step was not performed.

<<Preparation of Binder Raw Material Powder»

The binder raw material powder was prepared by the following procedure.

<Sample 2-1 to Sample 2-7, Sample 2-9 to Sample 2-18, Sample 2-29, Sample 2-30>

A WC powder, a Co powder and an Al powder were mixed at the mass ratio of 3:8:1, and the mixture was subjected to heat treatment at 1200 °C for 30 minutes in a vacuum atmosphere, and then mixed and pulverized by a wet ball mill to obtain a binder raw material powder.

<Sample 2-19 to Sample 2-27>

In Sample 2-19 to Sample 2-27, a WC powder, a Co powder, an Al powder, and a metal element powder were mixed at the mass ratio of 3:5:1:3, and the mixture was subjected to heat treatment at 1200 °C for 30 minutes in a vacuum atmosphere, and then mixed and pulverized with a wet ball mill to obtain a binder raw material powder. As the metal element powder, a Cr powder was used in Sample 2-19, a Mo powder was used in Sample 2-20, a V powder was used in Sample 2-21, an Nb powder was used in Sample 2-22, a Ta powder was used in Sample 2-23, a Ti powder was used in Sample 2-24, a Zr powder was used in Sample 2-25, an Hf powder was used in Sample 2-26, and an Si powder was used in Sample 2-27.

<Sample 2-28>

A binder of Sample 2-28 was obtained without using a binder raw material powder, by placing Al plates above and below cBN grains in the sintering step, and infiltrating Al into the cBN during the sintering step, thereby obtaining AlN and $AlB_2$ as reactive products.

<<Mixing Step>>

The cBN powder subjected to at least one of the electron beam irradiation, the pressure and heat treatment, and the heat treatment under low oxygen was mixed with the binder raw material powder, and the mixture was uniformly mixed by a wet ball mill method using ethanol to obtain a mixed powder. Thereafter, degassing treatment was performed at 900 °C under vacuum in order to remove impurities such as moisture on the surface. The mixing ratio of the cBN powder and the binder raw material powder when producing the mixed powder was adjusted so that the ratio (volume%) of the cBN grains and the binder in the cubic boron nitride sintered material was the ratio described in the "cBN grain (volume%)" and "binder (volume%)" columns of the "cBN sintered material" in Table 4.

<<Sintering Step>>

Next, in the sample using a binder raw material powder, a mixed powder was filled in a Ta (tantalum) container in a state where the mixed powder was in contact with a WC-6% Co cemented carbide disk, and then the container was vacuum-sealed. The temperature of the vacuum-sealing was 850 °C or higher. The pressure of the vacuum-sealed mixed powder was increased to 6 GPa at a pressure increase rate of 0.2 GPa/min using the belt-type ultra-high pressure and high temperature generation apparatus, and the mixed powder was sintered for 30 minutes under conditions of 6 GPa and 1300 °C, thereby obtaining a cBN sintered material of each of the samples.

In Sample 2-28, the cBN sintered material was obtained by filling the cBN grains with Al metal plates placed above and below the cBN grains and sintering the cBN grains.

<Sample 2-8, Sample 2-31>

In the Samples 2-8 and 2-31, a cBN powder was filled in a Ta (tantalum) container in a state where the cBN powder was in contact with a WC-6% Co cemented carbide disk, and then the container was vacuum-sealed. The temperature of the vacuum-sealing was 850 °C or higher. The pressure of the vacuum-sealed mixed powder was increased to 12 GPa at a pressure increase rate of 0.2 GPa/min using the belt-type ultra-high pressure and high temperature generation apparatus, and the mixed powder was sintered for 30 minutes under the conditions of 12 GPa and 2000 °C, thereby obtaining a cBN sintered material of each of the samples.

[Table 3]

| Sample No. | Electron Beam Irradiation | | Pressure and Heat Treatment | | | Heat Treatment Under Low Oxygen | | |
|---|---|---|---|---|---|---|---|---|
| | Energy (MeV) | Time (hr) | Pressure (GPa) | Temperature (°C) | Time (Min) | Oxygen Partial Pressure | Temperature (°C) | Time (Min) |
| 2-1 | 27 | 15 | 6 | 1400 | 30 | $1\times10^{-30}$atm | 1000 | 30 |
| 2-2 | 27 | 15 | 7 | 1500 | 30 | $1\times10^{-30}$atm | 1000 | 30 |
| 2-3 | 27 | 15 | 8 | 1600 | 30 | $1\times10^{-29}$atm | 1000 | 10 |

(continued)

| Sample No. | Electron Beam Irradiation | | Pressure and Heat Treatment | | | Heat Treatment Under Low Oxygen | | |
|---|---|---|---|---|---|---|---|---|
| | Energy (MeV) | Time (hr) | Pressure (GPa) | Temperature (°C) | Time (Min) | Oxygen Partial Pressure | Temperature (°C) | Time (Min) |
| 2-4 | 27 | 15 | 8 | 1600 | 30 | $1\times10^{-29}$atm | 1000 | 30 |
| 2-5 | 27 | 15 | 8 | 1600 | 30 | $1\times10^{-30}$atm | 1000 | 30 |
| 2-6 | 27 | 15 | 8 | 1600 | 30 | $1\times10^{-30}$atm | 1000 | 30 |
| 2-7 | 27 | 15 | 8 | 1600 | 30 | $1\times10^{-30}$atm | 1000 | 30 |
| 2-8 | 27 | 15 | 8 | 1600 | 30 | $1\times10^{-30}$atm | 1000 | 30 |
| 2-9 | 30 | 20 | 9 | 1600 | 30 | $1\times10^{-29}$atm | 1000 | 10 |
| 2-10 | 30 | 20 | 10 | 1600 | 30 | $1\times10^{-29}$atm | 1000 | 10 |
| 2-11 | 30 | 20 | 11 | 1600 | 30 | $1\times10^{-29}$atm | 1000 | 10 |
| 2-12 | 30 | 20 | 12 | 1600 | 30 | $1\times10^{-29}$atm | 1000 | 10 |
| 2-13 | - | - | - | - | - | $1\times10^{-30}$atm | 1000 | 30 |
| 2-14 | 27 | 15 | 4 | 1300 | 30 | $1\times10^{-30}$atm | 1000 | 30 |
| 2-15 | 27 | 15 | 6 | 1400 | 30 | - | - | - |
| 2-16 | 27 | 15 | 8 | 1600 | 30 | - | - | - |
| 2-17 | - | - | - | - | - | - | - | - |
| 2-18 | 27 | 15 | 8 | 1600 | 30 | $1\times10^{-29}$atm | 1000 | 30 |
| 2-19 | 27 | 15 | 8 | 1600 | 30 | $1\times10^{-30}$atm | 1000 | 30 |
| 2-20 | 27 | 15 | 8 | 1600 | 30 | $1\times10^{-30}$atm | 1000 | 30 |
| 2-21 | 27 | 15 | 8 | 1600 | 30 | $1\times10^{-30}$atm | 1000 | 30 |
| 2-22 | 27 | 15 | 8 | 1600 | 30 | $1\times10^{-30}$atm | 1000 | 30 |
| 2-23 | 27 | 15 | 8 | 1600 | 30 | $1\times10^{-30}$atm | 1000 | 30 |
| 2-24 | 27 | 15 | 8 | 1600 | 30 | $1\times10^{-30}$atm | 1000 | 30 |
| 2-25 | 27 | 15 | 8 | 1600 | 30 | $1\times10^{-30}$atm | 1000 | 30 |
| 2-26 | 27 | 15 | 8 | 1600 | 30 | $1\times10^{-30}$atm | 1000 | 30 |
| 2-27 | 27 | 15 | 8 | 1600 | 30 | $1\times10^{-30}$atm | 1000 | 30 |
| 2-28 | 27 | 15 | 8 | 1600 | 30 | $1\times10^{-30}$atm | 1000 | 30 |
| 2-29 | - | - | - | - | - | - | - | - |
| 2-30 | - | - | - | - | - | - | - | - |
| 2-31 | - | - | - | - | - | - | - | - |

«Evaluation»

<Composition of cBN Sintered Material>

The content ratios (volume%) of the cBN grains and the binder in the cBN sintered material were measured. The specific measurement method is the same as the method described in the first embodiment, and thus the description thereof will not be repeated. In each of the samples, the content ratio (volume%) of the cBN grains in the cBN sintered material is shown in the column of "cBN grain (volume%)" of "cBN sintered material" in Table 4, and the content ratio (volume%) of the binder is shown in the column of "binder (volume%)" of "cBN sintered material" in Table 4.

<Composition of Binder>

The composition of the binder in the cBN sintered material was measured. The specific measurement method is the same as the method described in the first embodiment, and thus the description thereof will not be repeated. The results are shown in the column of "binder" of "cBN sintered material" in Table 4. In all the samples, the total content ratio of the compounds described in the "binder" column of Table 4 in the binder was 50 volume% or more.

<Lattice Constant of cBN Grain>

The lattice constant of the cBN grain in the cBN sintered material was measured. The specific measurement method is the same as the method described in the first embodiment, and thus the description thereof will not be repeated. The results are shown in the column of "lattice constant (Å) of cBN grain" of "cBN sintered material" in Table 4.

<Silicon Content Ratio in cBN Grain>

The silicon content ratio in the cBN grain in the cBN sintered material was measured. The specific measurement method is the same as the method described in the first embodiment, and thus the description thereof will not be repeated. The results are shown in the column of "Si content (mass%) in cBN grain" of "cBN sintered material" in Table 4. In Table 4, the notation "< 0.001" means that the silicon content ratio is below the detection limit.

<Grain Sizes of cBN Grains>

The median diameter d50 of the circle equivalent diameters of the cBN grains in the cBN sintered material was measured. The specific measurement method is the same as the method described in the first embodiment, and thus the description thereof will not be repeated. In all the samples, the median diameter d50 of the circle equivalent diameters of the cBN grains was in a range of 1 nm to 15000 nm.

<Cutting Test>

A cutting tool (base material shape: CNGA120408) was produced using the cBN sintered material of each of the samples. Using this, a cutting test was conducted under the following cutting conditions. The following cutting conditions correspond to high-speed, high-efficiency machining of sintered alloys.

Cutting speed: 180 m/min.
Feed speed: 0.14 mm/rev.
Cutting depth: 0.18 mm
Coolant: DRY
Cutting method: end surface intermittent cutting
Lathe: LB4000 (manufactured by Okuma Corporation)
Workpiece: Sprocket shape (end face cut of sintered metal DM-50 (hardened) manufactured by SUMITOMO ELECTRIC SINTERED ALLOY, LTD., HV440)
Evaluation method: The cutting edge was observed for each 0.5 km, and the presence or absence of chipping of the cutting edge was confirmed. The cut length at the time when a fracture of 0.2 mm or more occurred was measured, and this cut length was defined as the life of the cutting tool. The results are shown in the column "tool life (km)" of Table 4.

[Table 4]

| Sample No. | cBN Sintered Material | | | | | Tool Life (km) |
|---|---|---|---|---|---|---|
| | cBN Grain (Volume%) | Binder (Volume%) | Binder | Lattice Constant of cBN Grain (Å) | Si Content in cBN Grain (Mass%) | |
| 2-1 | 90 | 10 | WC, Co, Al | 3.6161 | <0.001 | 1.8 |

(continued)

| Sample No. | cBN Sintered Material | | | | | Tool Life (km) |
|---|---|---|---|---|---|---|
| | cBN Grain (Volume%) | Binder (Volume%) | Binder | Lattice Constant of cBN Grain (Å) | Si Content in cBN Grain (Mass%) | |
| 2-2 | 90 | 10 | WC, Co, Al | 3.6158 | <0.001 | 2.0 |
| 2-3 | 90 | 10 | WC, Co, Al | 3.6155 | 0.02 | 2,2 |
| 2-4 | 90 | 10 | WC, Co, Al | 3.6155 | 0.01 | 2.3 |
| 2-5 | 90 | 10 | WC, Co, Al | 3.6155 | <0.001 | 2.5 |
| 2-6 | 95 | 5 | WC, Co, Al | 3.6155 | <0.001 | 2.6 |
| 2-7 | 99 | 1 | WC, Co, Al | 3.6155 | <0.001 | 2.5 |
| 2-8 | 100 | 0 | - | 3.6155 | <0.001 | 2.4 |
| 2-9 | 90 | 10 | WC, Co, Al | 3.6150 | <0.001 | 2.6 |
| 2-10 | 90 | 10 | WC, Co, Al | 3.6145 | <0.001 | 2.5 |
| 2-11 | 90 | 10 | WC, Co, Al | 3.6142 | <0.001 | 2.0 |
| 2-12 | 90 | 10 | WC, Co, Al | 3.6140 | <0.001 | 1.8 |
| 2-13 | 90 | 10 | WC, Co, Al | 3.6165 | <0.001 | 0.8 |
| 2-14 | 90 | 10 | WC, Co, Al | 3.6162 | <0.001 | 0.9 |
| 2-15 | 90 | 10 | WC, Co, Al | 3.6161 | 0.05 | 1.5 |
| 2-16 | 90 | 10 | WC, Co, Al | 3.6155 | 0.05 | 1.6 |
| 2-17 | 90 | 10 | WC, Co, Al | 3.6165 | 0.05 | 0.5 |
| 2-18 | 95 | 5 | WC, Co, Al | 3.6155 | 0.01 | 2.4 |
| 2-19 | 90 | 10 | WC, Co, Al, Cr | 3.6155 | <0.001 | 2.6 |
| 2-20 | 90 | 10 | WC, Co, Al, Mo | 3.6155 | <0.001 | 2.5 |
| 2-21 | 90 | 10 | WC, Co, Al, V | 3.6155 | <0.001 | 2.5 |
| 2-22 | 90 | 10 | WC, Co, Al, Nb | 3.6155 | <0.001 | 2.6 |

(continued)

| Sample No. | cBN Sintered Material | | | | | Tool Life (km) |
|---|---|---|---|---|---|---|
| | cBN Grain (Volume%) | Binder (Volume%) | Binder | Lattice Constant of cBN Grain (Å) | Si Content in cBN Grain (Mass%) | |
| 2-23 | 90 | 10 | WC, Co, Al, Ta | 3.6155 | <0.001 | 2.6 |
| 2-24 | 90 | 10 | WC, Co, Al, Ti | 3.6155 | <0.001 | 2.6 |
| 2-25 | 90 | 10 | WC, Co, Al, Zr | 3.6155 | <0.001 | 2.6 |
| 2-26 | 90 | 10 | WC, Co, Al, Hf | 3.6155 | <0.001 | 2.6 |
| 2-27 | 90 | 10 | WC, Co, Al, Si | 3.6155 | <0.001 | 2.5 |
| 2-28 | 90 | 10 | AlN, AlB$_2$ | 3.6155 | <0.001 | 2.0 |
| 2-29 | 95 | 5 | WC, Co, Al | 3.6165 | 0.05 | 0.5 |
| 2-30 | 99 | 1 | WC, Co, Al | 3.6165 | 0.05 | 0.4 |
| 2-31 | 100 | 0 | - | 3.6165 | 0.05 | 0.3 |

<Consideration>

Sample 2-1 to Sample 2-12 and Sample 2-18 to Sample 2-28 correspond to Examples. Sample 2-13 to Sample 2-17 and Sample 2-29 to Sample 2-31 correspond to Comparative Examples. It was confirmed that the tool life of each of Sample 2-1 to Sample 2-12 and Sample 2-18 to Sample 2-28 (Examples) was longer than that of each of Sample 2-13 to Sample 2-17 and Sample 2-29 to Sample 2-31 (Comparative Examples) in high-efficiency machining.

Although the embodiments and Examples according to the present disclosure have been described above, it is originally intended that the configurations of the embodiments and Examples described above be appropriately combined or variously modified. It should be understood that the embodiment and Example disclosed in the present disclosure are illustrative and non-restrictive in every respect. The scope of the present invention is defined by the terms of the claims rather than the embodiments and Examples described above, and is intended to include any modifications within the scope and meaning equivalent to the terms of the claims.

**Claims**

1. A cubic boron nitride sintered material comprising 35 volume% to 100 volume% of a cubic boron nitride grain and 0 volume% to 65 volume% of a binder,

   wherein a lattice constant of the cubic boron nitride grain is 3.6140 Å to 3.6161 Å,
   a silicon content ratio in the cubic boron nitride grain is 0.02 mass% or less, and
   the binder includes at least one selected from a group consisting of a compound and a solid solution of the compound, the compound consisting of at least one element selected from a group consisting of a group 4 element, a group 5 element, a group 6 element in the periodic table, aluminum, silicon, iron, cobalt, and nickel and at least one element selected from a group consisting of carbon, nitrogen, boron, and oxygen.

2. The cubic boron nitride sintered material according to claim 1, wherein the lattice constant of the cubic boron nitride grain is 3.6142 Å to 3.6158 Å.

3. The cubic boron nitride sintered material according to claim 1 or 2, wherein the lattice constant of the cubic boron nitride grain is 3.6145 Å to 3.6155 Å.

4. The cubic boron nitride sintered material according to any one of claims 1 to 3, wherein the silicon content ratio in the cubic boron nitride grain is 0.01 mass% or less.

5. The cubic boron nitride sintered material according to any one of claims 1 to 4, wherein the silicon content ratio in the cubic boron nitride grain is 0.001 mass% or less.

6. The cubic boron nitride sintered material according to any one of claims 1 to 5, wherein a content ratio of the cubic boron nitride grain in the cubic boron nitride sintered material is 40 volume% to 95 volume%.

FIG.1

FIG.2

Q1

FIG.3

FIG.4

FIG.5

FIG.6

## INTERNATIONAL SEARCH REPORT

International application No.

**PCT/JP2022/039524**

### A.   CLASSIFICATION OF SUBJECT MATTER

***C04B 35/5835***(2006.01)i
FI:   C04B35/5835

According to International Patent Classification (IPC) or to both national classification and IPC

### B.   FIELDS SEARCHED

Minimum documentation searched (classification system followed by classification symbols)

C04B35/00-C04B35/84,B32B27/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

### C.   DOCUMENTS CONSIDERED TO BE RELEVANT

| Category* | Citation of document, with indication, where appropriate, of the relevant passages | Relevant to claim No. |
|---|---|---|
| X | MUKHANOV V. A. The Effect of Doping on the Lattice Parameter and Properties of Cubic Boron Nitride. Journal of Superhard Materials , 2020, vol. 42 no. 6, pp. 377-387, doi:10.3103/S1063457620060088, p. 20<br>abstract, experimental procedure, fig. 3b | 1-6 |
| Y | JP 2005-187260 A (SUMITOMO ELECTRIC HARDMETAL CORP.) 14 July 2005 (2005-07-14)<br>claims, paragraphs [0001], [0013], table 2 | 1-6 |
| Y | WO 2005/066381 A1 (SUMITOMO ELECTRIC HARDMETAL CORP.) 21 July 2005 (2005-07-21)<br>claims, paragraphs [0020], [0024] | 1-6 |
| Y | JP 61-117856 A (SUMITOMO ELECTRIC INDUSTRIES, LTD.) 05 June 1986 (1986-06-05)<br>p. 3, lower right column, line 20 to p. 4, upper left column, line 11 | 1-6 |
| Y | JP 1-270570 A (SHOWA DENKO KK) 27 October 1989 (1989-10-27)<br>p. 3, lower right column, lines 1-4, example 1, p. 4, lower right column, lines 1-4 | 1-6 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/039524**

| C. | DOCUMENTS CONSIDERED TO BE RELEVANT | | |
|---|---|---|
| Category* | Citation of document, with indication, where appropriate, of the relevant passages | Relevant to claim No. |
| A | WO 2013/150610 A1 (SUMITOMO ELECTRIC HARDMETAL CORP.) 10 October 2013 (2013-10-10) | 1-6 |

Form PCT/ISA/210 (second sheet) (January 2015)

INTERNATIONAL SEARCH REPORT
Information on patent family members

International application No.

**PCT/JP2022/039524**

| Patent document cited in search report | | | Publication date (day/month/year) | Patent family member(s) | | | Publication date (day/month/year) |
|---|---|---|---|---|---|---|---|
| JP | 2005-187260 | A | 14 July 2005 | US | 2005/0143252 | A1 | |
| | | | | claims, paragraphs [0002], [0014], table 2 | | | |
| | | | | EP | 1547990 | A2 | |
| | | | | KR | 10-2005-0065402 | A | |
| | | | | CN | 1636935 | A | |
| WO | 2005/066381 | A1 | 21 July 2005 | US | 2008/0214383 | A1 | |
| | | | | claims, paragraphs [0023], [0027] | | | |
| | | | | EP | 1712649 | A1 | |
| | | | | KR | 10-2006-0101773 | A | |
| | | | | CN | 1906318 | A | |
| JP | 61-117856 | A | 05 June 1986 | (Family: none) | | | |
| JP | 1-270570 | A | 27 October 1989 | (Family: none) | | | |
| WO | 2013/150610 | A1 | 10 October 2013 | US | 2013/0260165 | A1 | |
| | | | | CN | 103459071 | A | |
| | | | | EP | 2835195 | A1 | |
| | | | | KR | 10-2013-0137116 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021039320 W
- WO 2005066381 A

- JP 2005514300 W